Europäisches Patentamt

European Patent Office

Office européen des brevets

(19)

(11) Veröffentlichungsnummer : **0 407 783 B1**

# EUROPÄISCHE PATENTSCHRIFT

(12)

(45) Veröffentlichungstag der Patentschrift :
**29.07.92 Patentblatt 92/31**

(51) Int. Cl.⁵ : **B23Q 1/26**, **B24B 41/04**,
**F16C 31/04**

(21) Anmeldenummer : **90111834.9**

(22) Anmeldetag : **22.06.90**

(54) **Pinolenzustellung für Werkzeugmaschinen, insbesondere Flachschleifmaschinen.**

(30) Priorität : **13.07.89 DE 3923156**

(43) Veröffentlichungstag der Anmeldung :
**16.01.91 Patentblatt 91/03**

(45) Bekanntmachung des Hinweises auf die
Patenterteilung :
**29.07.92 Patentblatt 92/31**

(84) Benannte Vertragsstaaten :
**CH DE ES FR GB IT LI**

(56) Entgegenhaltungen :
**EP-A- 0 045 433**
**DD-A- 136 878**
**DE-A- 2 245 437**
**DE-A- 3 506 005**
**FR-A- 1 022 462**
**US-A- 1 064 863**

(73) Patentinhaber : **DISKUS WERKE FRANKFURT
AM MAIN AKTIENGESELLSCHAFT
Vilbeler Landstrasse 36
W-6000 Frankfurt-Fechenheim (Main) (DE)**

(72) Erfinder : **Hofsess, Alexander, Dipl.-Ing.
Forsthausstrasse 29
W-6072 Dreieich (DE)**
Erfinder : **Dao-Xuan, Phon, Dipl.-Ing.
Niederbornstrasse 2
W-6000 Frankfurt 50 (DE)**

(74) Vertreter : **Hubbuch, Helmut, Dipl.-Ing et al
Patentanwälte Dr. Rudolf Bauer Dipl.-Ing.
Helmut Hubbuch Dipl.-Phys. Ulrich Twelmeier
Westliche Karl-Friedrich-Strasse 29-31
W-7530 Pforzheim (DE)**

## Beschreibung

Die Erfindung bezieht sich auf eine Pinolenzustellung für Werkzeugmaschinen, insbesondere Flachschleifmaschinen, bestehend aus einer Vorschubpinole, in welcher die Schleifwelle spielfrei gelagert ist und einer antriebsseitigen Riemenscheibe auf der Schleifwelle, sowie werkzeugseitiger Aufnahme für die Schleifwerkzeuge, wie Schleifscheibe, wobei die Vorschubpinole in wenigstens zwei Führungsbereichen aufgenommen ist.

Es sind Pinolenzustellungen bekannt, bei welchen die Pinole am Umfang ein Gewinde trägt, in welches eine Beistellmutter mit Antrieb einer Schraubenwelle zur Pinolenverstellung eingreift. Zur Beseitigung des axialen Spiels ist nach DE-PS 894 969 die Beistellmutter geteilt und beide Teile sind bei undrehbarer Verbindung unter Federdruck axial gegeneinander verspannt.

Desweiteren ist anstelle solcher Schraubenzustellungen der Pinole selbst nach der DE-OS 35 06 005 auch bekannt, die Pinolenzustellung mittels einer oder mehrerer, parallelen Kugel- oder Rollengewindetriebe über eine Quertraverse zu verstellen; hierbei kommt es auf eine radiale Spielfreiheit an, wobei hier eine Klemmung der Vorschubpinole an zwei Führungsbuchsen in Ruhelage erfolgt, welche zur Verstellung mittels Öldruck lösbar ist. Dies ist umständlich und störungsanfällig, was es zu vermeiden gilt.

Es ist nun Aufgabe der Pinolenzustellung gemäß der Erfindung, bei der letztgenannten Zustellform eine radial spielfreie Axialführung zu erhalten.

Zur Lösung dieser Aufgabe kennzeichnet sich die Pinolenzustellung gemäß der Erfindung nach dem Oberbegriff des Anspruchs 1 dadurch, daß die Pinole zur spielfreien Führung am Umfang mindestens drei Längsleisten aufweist, welche jeweils in beidseitigen Rollenführungen der Pinolenaufnahmen laufen; hierbei sind insbes. vier Längsleisten zur Pinolenführung vorgesehen. Es wird durch die erfindungsgemäße Pinolenverstellung erreicht, daß sich Vorspannungsänderungen von Spindellagerung und Pinolenführung nicht gegenseitig beeinflussen. Hierbei sind die Längsleisten zur Pinolenführung einerseits am Pinolenumfang befestigt und reichen andererseits in Längsausnehmungen der Pinolenlager jeweils zwischen beidseitige Rollenführungen.

Eine bevorzugte Ausführungsform der erfindungsgemäßen Pinolenzustellung ist für Flachschleifmaschinen beispielsweise in der Zeichnung dargestellt und zwar zeigen:

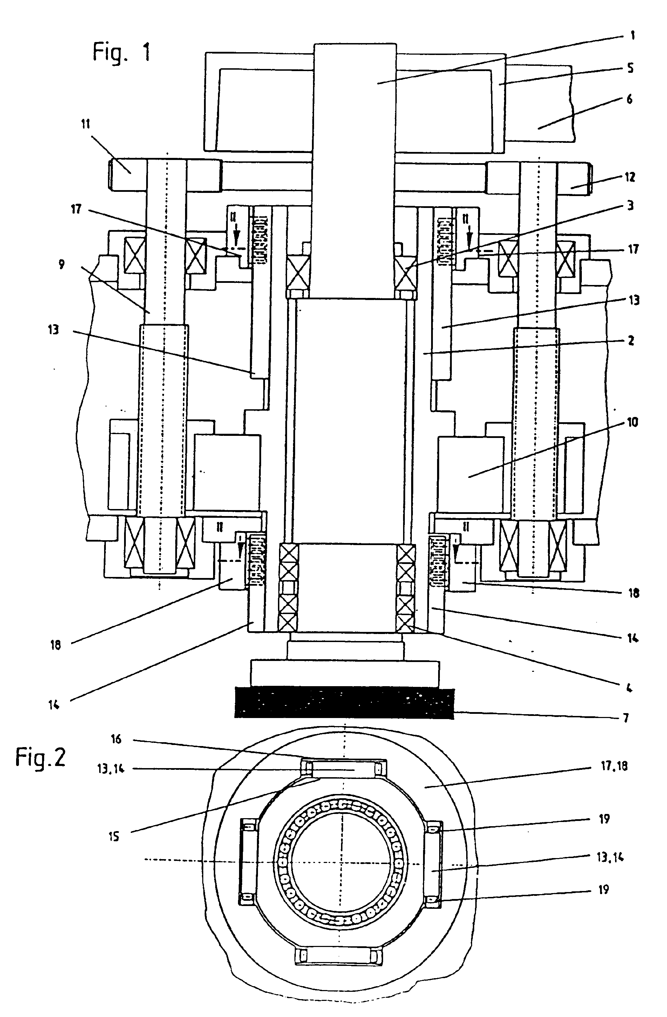

Figur 1 den Längsschnitt durch eine erfindungsgemäße Pinolenzustellung und

Figur 2 den Querschnitt durch die Pinole nach Figur 1 jeweils bei der Linie II-II.

Wie aus der Zeichnung ersichtlich ist, besteht die Pinolenzustellung nach der Erfindung aus der Schleifwelle 1 als eigentlicher Schleifspindel mit der sie lagernden Vorschubpinole 2, wobei die Lagerung der Schleifwelle 1 in zwei Wälzlagerbereichen 3 und 4 erfolgt. Die Schleifwelle 1 trägt antriebseitig die Rimenscheibe 5 zum Riemenantrieb 6 von dem hier nicht dargestellten Antriebsmotor und dient werkzeugseitig der vermittels Pinole 2 zu- und nachstellbaren Schleifscheibe 7. Die Vorschubpinole 2 ist mittels zwei parallelen Schraubspindeln 8 und 9, hier in Form von Kugelrollenspindeln, über eine Quertraverse 10 höhenverstellbar, was mittels Antrieb bei 11 und 12 geschieht, wobei der zugehörige Antriebsmotor hier nicht dargestellt ist.

Zur spielfreien Führung sind an der Vorschubpinole 2 hier vier Längsleisten 13 und 14 ls Führungsleisten in zwei Führungsbereichen vorgesehen, die (13 und 14) einerseits am Pinolenumfang bei 15 befestigt sind und andererseits in Längsausnehmungen 16 der beiden Pinolenlager 17 und 18 antriebs- und werkzeugseitig jeweils zwischen beidseitigen Rollenführungen 19 reichen. Hier können auch einfach nach außen führende Schmiernippel vorgesehen werden.

## Patentansprüche

1. Pinolenzustellung für Werkzeug-, insbesondere Flachschleifmaschinen, bestehend aus einer Vorschubpinole (2), in der die Schleifwelle (1) spielfrei gelagert ist und einer antriebsseitigen Riemenscheibe (5) auf der Schleifwelle (1), sowie werkzeugseitiger Aufnahme für die Schleifwerkzeuge, wie Schleifscheibe (7), wobei die Vorschubpinole (2) in wenigstens zwei Führungsbereichen (3 u. 4) aufgenommen ist und, wobei die Pinole (2) mittels einer oder mehrerer parallelen Schraubspindeln (8 u. 9) über eine Quertraverse (10) verstellbar ist, **dadurch gekennzeichnet,** daß die Pinole (2) zur spielfreien Führung am Umfang mindestens drei Längsleisten (13;14) aufweist, welche jeweils in beidseitigen Rollenführungen (19) der Pinolenaufnahme laufen.

2. Pinolenzustellung nach Anspruch 1, **dadurch gekennzeichnet,** daß vier Längsleisten (13,14) zur Pinolenführung vorgesehen sind.

3. Pinolenzustellung nach Anspruch 1 oder 2, **dadurch gekennzeichnet,** daß die Längsleisten (13,14) zur Pinolenführung einerseits am Pinolenumfang (bei 15) befestigt sind und andererseits in Längsausnehmungen (16) der Pinolenlager (17 u. 18) jeweils zwischen beidseitige Rollenführungen (19) reichen.

4. Pinolenzustellung nach einem der Ansprüche 1 bis 3,

**dadurch gekennzeichnet,** daß die Längsleisten (13,14) zur spielfreien Führung sowohl im Bereich (3 u. 4) der antriebsseititen als auch werkzeugseitigen Pinolenführung vorgesehen sind.

## Claims

1. A sleeve-type feeding apparatus for machine-tools, particularly surface-grinding machines, consisting of a feeding sleeve (2), in which the grinding shaft (1) is movably mounted without a backlash, a belt pulley (5), which is provided on the driving side of the grinding shaft (1), and a receptacle for the grinding tools, such as the grinding wheel (7), which is provided on the tool-side, wherein the feeding sleeve (2) is received in at least two guiding regions (3 and 4) and the sleeve (2) is adjustable by means of one or more parallel screws ( and 9) and by means of a crosspiece (10), **characterized in that** the sleeve (2) for its backlashfree guidance is provided on its circumference with at least three longitudinal ribs (13, 14), each of which is movable in roller guides (19) provided on both sides and belonging to the receptacle for the sleeve.

2. A sleeve-type feeding apparatus according to claim 1, **characterized in that** four longitudinal ribs (13, 14) for guiding the sleeve are provided.

3. A sleeve-type feeding apparatus according to claim 1 or 2, **characterized in that** the longitudinal ribs (13, 14) for guiding the sleeve are secured on one side to the circumference of the sleeve (at 15) and on the other side extend in longitudinal recesses (16) of the sleeve bearings (17 and 18) and extend each between roller guides (19) provided on both sides.

4. A sleeve-type feeding apparatus according to any of claims 1 to 3, **characterized in that** the longitudinal ribs (13, 14) for a guidance without a backlash are provided adjacent to the sleeve guides (3 and 4) on the drive side and on the tool side.

## Revendications

1. Mécanisme d'avance de fourreau pour machine-outils, en particulier rectifieuses de surface, composé d'un fourreau d'approche (2) dans lequel l'arbre de rectification (1) est monté sans jeu et d'une poulie (5) côté moteur sur l'arbre (1), ainsi que d'un logement côté outil pour les outils de rectification tels que des meules (7), le fourreau d'approche (2) étant reçu dans au moins deux régions de guidage (3 et 4), et le fourreau (2) pouvant être déplacé par rapport à une traverse transversale (10) au moyen d'une ou plusieurs broches filetées (8 et 9), **caractérisé en ce que** le fourreau (2) présente à sa périphérie, pour le guidage sans jeu, au moins trois barres longitudinales (13,14) dont chacune roule dans des guides à rouleaux (19) situés des deux côtés.

2. Mécanisme d'avance de fourreau selon la revendication 1, **caractérisé en ce qu'**il est prévu quatre barres longitudinales (13,14) pour le guidage du fourreau.

3. Mécanisme d'avance de fourreau selon l'une des revendications 1 et 2, **caractérisé en ce que** les barres longitudinales (13,14) pour le guidage du fourreau d'une part sont fixées à la périphérie du fourreau (en 15) et d'autre part s'étendent dans des évidements longitudinaux (16) des paliers de fourreau (17 et 18), chacune entre des guides à rouleaux(19) situés des deux côtés.

4. Mécanisme d'avance de fourreau selon l'une des revendications 1 à 3, **caractérisé en ce que** les barres longitudinales (13,14) pour le guidage sans jeu sont prévues dans les régions (3 et 4) de guidage du fourreau tant du côté moteur que du côté outils.

Fig. 1

Fig.2

4